Europäisches Patentamt

European Patent Office

Office européen des brevets

Numéro de publication: **0 298 343**

**A1**

## DEMANDE DE BREVET EUROPEEN

Numéro de dépôt: **88110288.3**

Int. Cl.⁴ **G07B 15/02 , G08G 1/14 , G06K 7/10**

Date de dépôt: **28.06.88**

Priorité: **29.06.87 FR 8709139**

Date de publication de la demande:
**11.01.89 Bulletin 89/02**

Etats contractants désignés:
**DE ES FR GB IT SE**

Demandeur: **COMPAGNIE GENERALE
D'AUTOMATISME CGA-HBS
12, rue de la Baume
F-75008 Paris(FR)**

Inventeur: **Baumberger, Philippe
3, avenue du Petit Chambord
F-92340 Bourg la Reine(FR)**

Mandataire: **Weinmiller, Jürgen et al
Lennéstrasse 9 Postfach 24
D-8133 Feldafing(DE)**

Système pour la lecture automatique de données d'identification, apposées sur un véhicule.

Système pour la lecture automatique de données d'identification apposées sur un véhicule, caractérisé en ce qu'il comprend une caméra (3) de télévision reliée à une unité de traitement (5), une unité mémoire (7) contenant un stock de données d'identification de n véhicules, acquis préalablement ou au début des transactions des moyens (8) de lecture du contenu de la mémoire et de comparaison avec le signal de sortie de l'unité de traitement (5) fournissant un signal de reconnaissance ou de non reconnaissance appliqué à des moyens de commande automatique (9) d'un dispositif quelconque d'autorisation ou non d'accès. lesdites données d'identification étant constituées, pour chaque véhicule, par sa plaque d'immatriculation minéralogique (1), associée à un repère optique additionnel (2) voisin de la plaque, ledit repère étant choisi de manière à produire un signal vidéo très caractéristique facilement analysable par ladite unité de traitement (5).

# Système pour la lecture automatique de données d'identification apposées sur un véhicule.

La présente invention concerne un système pour la lecture automatique de données d'identification apposées sur un véhicule.

L'invention s'applique en particulier pour des autorisations d'accès à des abonnés, dans des parcs de stationnement payant ou sur des autoroutes payantes.

Il est en effet intéressant de pouvoir lire automatiquement des données d'identification d'un véhicule afin de pouvoir reconnaître automatiquement sur une liste si tel véhicule fait ou non partie d'abonnés pour lesquels l'accès est autorisé, le paiement étant effectué automatiquement par débit d'un compte tenu par l'exploitant ou préalablement et forfaitairement lors de la souscription de l'abonnement.

L'invention s'applique également à la saisie de données d'identification d'un véhicule dont l'heure d'entrée dans un parking ou la gare d'entrée sur une autoroute est mémorisée avec les données d'identification afin de permettre le calcul du montant du péage en sortie à une caisse ayant accès à ces données mémorisées.

Des données caractéristiques d'identification d'un véhicule sont évidemment constituées par sa plaque minéralogique.

L'intérêt de choisir comme données d'identification de véhicules leur plaque minéralogique, pour un exploitant d'une autoroute ou d'un parc de stationnement payants réside dans le fait qu'il n'y a pas à inventer un code caractéristique particulier puisqu'il existe, qu'il est très sûr et qu'en outre il est très dissuasif de fraude vis-à-vis des petits fraudeurs.

Cependant, la lecture automatique doit être réalisée très rapidement et pratiquement à la volée de manière à ne pas ralentir les entrées.

A cet égard, la lecture d'une plaque minéralogique et spécialement son repérage et sa distinction par rapport à d'autres inscriptions souvent présentes à l'arrière des véhicules, comme par exemple des étiquettes auto-collantes comportant divers textes, sont longs et difficiles.

La présente invention a pour but de pallier cet inconvénient et a ainsi pour objet un système pour la lecture automatique de données d'identification, apposées sur un véhicule, caractérisé en ce qu'il comprend une caméra de télévision reliée à une unité de traitement, lesdites données d'identification étant constituées, pour chaque véhicule, par sa plaque d'immatriculation minéralogique, associée à un repère optique additionnel voisin de la plaque, ledit repère étant choisi de manière à produire un signal vidéo très caractéristique facilement analysable par ladite unité de traitement.

Avantageusement, ledit repère optique additionnel est constitué par une plaque dont la surface est réfléchissante.

On utilise de préférence un caméra de télévision CCD associée à une source d'éclairement en infrarouge.

Afin d'optimiser la lecture de la plaque, le repère optique additionnel porte avantageusement un code, tel qu'un code barres par exemple, permettant une présélection des algorithmes de l'unité de traitement.

Selon une application particulière, ladite unité de traitement fournit en sortie, des signaux représentatifs desdites données d'identification et le système comporte en outre une unité mémoire contenant un stock de données d'identification de n véhicules, acquis préalablement ou au début de transactions, des moyens de lecture du contenu de la mémoire et de comparaison avec le signal de sortie de l'unité de traitement fournissant un signal de reconnaissance ou de non reconnaissance appliqué à des moyens de commande automatiques d'un dispositif quelconque d''autorisation ou non d'accès.

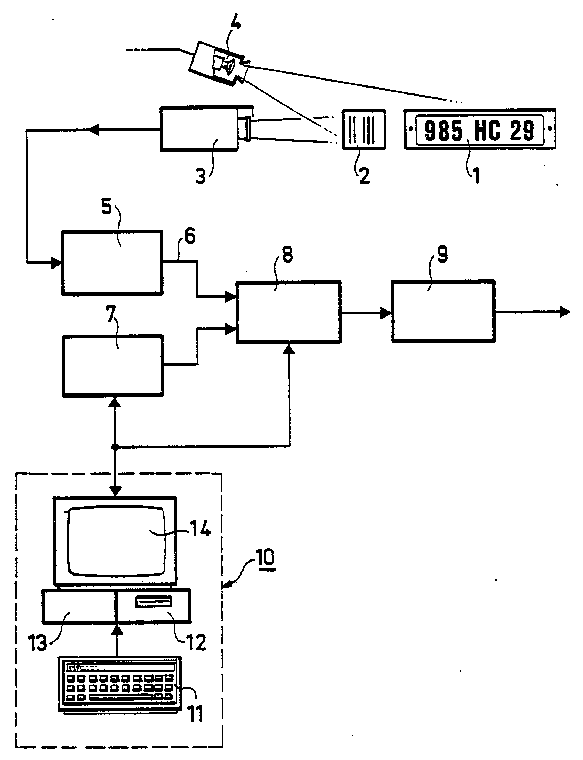

L'invention va maintenant être décrite en se reportant au dessin annexé comportant une figure unique représentant un diagramme du système selon l'invention appliqué au cas particulier non limitatif d'abonnés figurant sur une liste.

Un véhicule, non représenté, porte une plaque d'immatriculation minérologique 1. A cette plaque, on ajoute un repère optique additionnel 2.

Ce repère a pour but principal de faciliter la localisation automatique de la plaque 1 par un système d'analyse automatique d'image. A cet effet, ce repère 2 peut avoir une forme déterminée permettant de le distinguer facilement sur un signal vidéo et surtout, il est avantageusement réfléchissant.

En outre, il peut comporter un code tel qu'un code barres afin d'optimiser la lecture automatique de la plaque 1 en permettant une présélection des algorithmes de traitement en fonction, par exemple :

- de la nationalité du véhicule.
- du graphisme de la plaque.
- de la couleur de la plaque.

Le code peut également compléter les informations de la plaque 1, par exemple, il peut indiquer s'il s'agit d'un abonnement ou non, informer du type d'abonnement, de la classe du véhicule, de la durée de validité, de la zone de validité. Il peut aussi permettre de valider les informations lues sur la plaque en les comparant à un code de contrôle et en effectuant s'il y a lieu la correction des erreurs.

Un poste fixe, par exemple une entrée d'un parc de stationnement payant est équipé d'une caméra de télévision 3, par exemple du type CCD, associée à une source d'éclairement 4 en lumière infrarouge.

Le signal vidéo fournit par la caméra 3 est analysé par une unité de traitement 5 qui donne en sortie un signal 6 caractéristique des informations de la plaque minéralogique 1. Le système comprend en outre une unité mémoire 7 dans laquelle ont été introduites des informations relatives aux plaques minéralogiques d'un certain nombre n d'abonnés. La mémoire 7 est lue et comparée au signal 6 dans une unité 8 de lecture et de comparaison qui fournit un signal d'information de la présence ou de l'absence du numéro d'immatriculation de la plaque 1 dans le stock de la mémoire 7. Une commande automatique 9 commande l'ouverture et ou la fermeture d'une barrière ou commande un feu d'autorisation ou d'interdiction de passage.

L'ensemble comporte en outre un terminal 10 d'entrée et de gestion, relié à la mémoire 7 et à l'unité 8 et comprend un clavier 11, une unité mémoire 12 à disquette, une unité de couplage 13 et un écran 14.

Le repère 2 est tel qu'il produit un signal vidéo caractéristique, facilement analysable par l'unité de traitement 5. Il peut par exemple saturer le signal vidéo, le code qu'il porte étant constitué de barres noires. Le repérage facile de ce repère 2 permet l'identification rapide et complète des usagers répertoriés dans la mémoire 7 ayant un accès privilégié à une autoroute, un parc de stationnement ou à tout autre site à accès contrôlé.

Dans le cas d'application à des usagers non abonnés, l'unité de traitement 5 mémorise, avec les données d'identifcation du véhicule, l'heure d'entrée, permettant en sortie le calcul du montant du péage par une caisse ayant accès aux données mémorisées en entrée. L'unité de traitement 5 est alors directement reliée à la commande automatique 9 pour autoriser le libre passage du véhicule.

## Revendications

1 Système pour la lecture automatique de données d'identification apposées sur un véhicule, caractérisé en ce qu'il comprend une caméra (3) de télévision reliée à une unité de traitement (5), lesdites données d'identification étant constituées, pour chaque véhicule, par sa plaque d'immatriculation minéralogique (1), associée à un repère optique additionnel (2) voisin de la plaque, ledit repère étant choisi de manière à produire un signal vidéo très caractéristique facilement analysable par ladite unité de traitement (5).

2 Système de reconnaissance de véhicules selon la revendication 1, caractérisé en ce que ledit repère optique additionnel (2) est constitué par une plaque dont la surface est réfléchissante.

3/ Système de rconnaissance de véhicules selon la revendication 2, caractérisé en ce que ladite caméra (3) est une caméra CCD associée à une source d'éclairement (4) en infrarouge

4 Système de reconnaissance de véhicules selon l'une des revendications précédentes, caractérisé en ce que ledit repère optique additionnel (2) porte en outre un code permettant une présélection des algorithmes de l'unité de traitement (5).

5/ Système de reconnaissance de véhicules selon l'une des revendications précédentes caractérisé en ce que ladite unité de traitement (5) fournit en sortie, des signaux (6) représentatifs desdites données d'identification, et en ce qu'il comporte en outre une unité mémoire (7) contenant un stock de données d'identification de n véhicules, acquis préalablement ou au début des transactions des moyens (8) de lecture du contenu de la mémoire et de comparaison avec le signal de sortie de l'unité de traitement (5) fournissant un signal de reconnaissance ou de non reconnaissance appliqué à des moyens de commande automatique (9) d'un dispositif quelconque d'autorisation ou non d'accès.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 455 317  (HENNEQUIN) <br> * Page 2, lignes 4-33; page 5, ligne 20 - page 6, ligne 25; figures * <br> --- | 1-3,5 | G 07 B   15/02 <br> G 08 G    1/14 <br> G 06 K    7/10 |
| Y | DE-A-2 809 692  (TRAUTWEIN) <br> * Page 7, ligne 1 - page 8, ligne 4; page 11, ligne 20 - page 12, ligne 11; figures * <br> --- | 1,2 | |
| Y | GB-A-2 138 982  (BRITISH HOVERCRAFT) <br> * Résumé; page 1, ligne 30 - page 2, ligne 89; figures * | 3 | |
| A | --- | 1,2 | |
| Y | FR-A-2 570 528  (INSTITUT PO TECHNITSCHESKA KIBERNETIKA I ROBOTIKA) <br> * Page 8, ligne 17 - page 10, ligne 36; figures * | 5 | |
| A | --- | 1,4 | |
| A | FR-A-2 397 024  (OPTION) <br> * Page 1, lignes 15-33; page 2, ligne 34 - page 3, ligne 18; figures * <br> --- | 1-3,5 | DOMAINES TECHNIQUES RECHERCHES (Int. Cl.4) |
| A | US-A-4 555 618  (RISKIN) <br> * Résumé; figures * <br> --- | 1-3,5 | G 07 B <br> G 07 C <br> G 07 F <br> G 08 G |
| A | EP-A-0 040 839  (SIEMENS) <br> * Résumé; figures * <br> ----- | 1 | G 06 K <br> B 07 C <br> B 60 R |

Le présent rapport a été établi pour toutes les revendications

| Lieu de la recherche | Date d'achèvement de la recherche | Examinateur |
|---|---|---|
| LA HAYE | 06-10-1988 | MEYL D. |

EPO FORM 1503 03.82 (P0402)